# EUROPEAN PATENT APPLICATION

(11) **EP 3 911 060 A1**
(43) Date of publication of application: **17.11.2021**
(21) Application number: 19908363.5
(22) Date of filing: 09.01.2019
(51) Int. Cl.: H04W 72/04, H04W 72/12

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/000407
(87) International publication number: WO 2020/144780

(57) **Abstract**

A user terminal according to an aspect of the present disclosure includes a receiving section that receives downlink control information not including a field for a sounding reference signal (SRS) resource indicator or configuration information not including the SRS resource indicator, a transmitting section that transmits an uplink shared channel scheduled by using the downlink control information or configured by using the configuration information, and a control section that determines a spatial relation used to transmit the uplink shared channel.

## Description

### Technical Field

The present disclosure relates to a user terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

In existing LTE systems (for example, LTE Rel. 8 to Rel. 14), a user terminal (UE (User Equipment)) controls transmission of an uplink shared channel (Physical Uplink Shared Channel (PUSCH)), based on downlink control information (DCI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), studies have been conducted about beam management (BM) performed by the UE. Specifically, it is studied that the UE determines a spatial relation (also referred to as a beam, a spatial domain transmission filter, a spatial domain filter, space setting, and so on) used to transmit the PUSCH, based on a value of a certain field (for example, sounding reference signal (SRS) resource indicator (SRS Resource Indicator (SRI)) field) in DCI.

It is also studied that a configured grant-based PUSCH spatial relation is determined based on a value of a certain parameter (for example, an RRC information element "srs-ResourceIndicator") in configuration information regarding the PUSCH (configured grant configuration information, for example, an RRC information element "ConfiguredGrantConfig").

However, in a case where a certain condition is satisfied, the UE may fail to determine the spatial relation used to transmit the PUSCH, based on the certain field value in the DCI or a certain parameter in the configured grant configuration information.

Thus, an object of the present disclosure is to provide a user terminal and a radio communication method that can appropriately determine a spatial relation used to transmit a PUSCH.

### Solution to Problem

A user terminal according to an aspect of the present disclosure includes a receiving section that receives downlink control information not including a field for a sounding reference signal (SRS) resource indicator or configuration information not including the SRS resource indicator, a transmitting section that transmits an uplink shared channel scheduled by using the downlink control information or configured by using the configuration information, and a control section that determines a spatial relation used to transmit the uplink shared channel.

### Advantageous Effects of Invention

According to an aspect of the present disclosure, a spatial relation used to transmit a PUSCH can be appropriately determined.

### Brief Description of Drawings

FIG. 1 is a flowchart to show an example of determination of a spatial relation of a PUSCH according to a first aspect;
FIG. 2 is a diagram to show an example of CBRA;
FIG. 3 is a flowchart to show an example of determination of a spatial relation of a PUSCH according to a second aspect;
FIG. 4 is a diagram to show an example of a schematic structure of a radio communication system according to one embodiment;
FIG. 5 is a diagram to show an example of a functional structure of a base station according to one embodiment;
FIG. 6 is a diagram to show an example of a functional structure of a user terminal according to one embodiment; and
FIG. 7 is a diagram to show an example of a hardware structure of the base station and the user terminal according to one embodiment.

### Description of Embodiments

For NR, transmission of an uplink signal (for example, an uplink shared channel (Physical Uplink Shared Channel (PUSCH)), an uplink control channel (Physical Uplink Control Channel (PUCCH)), and so on) is controlled based on a spatial relation (also referred to as a spatial setting and so on).

The spatial relation may be a spatial relation between at least one of desired signals and channels (signal/channel) (for example, a PUCCH, a measurement reference signal (sounding reference signal (SRS), and the like) and a reference signal (reference RS).

The reference RS may be constituted of at least one of a synchronization signal block (SSB), a channel state information reference signal (CSI-RS), and the SRS, or at least one of these that is expanded or changed, for example. The SSB may also be referred to as an SS block, an SS/broadcast channel (Physical Broadcast Channel (SS/PBCH) block, and so on.

The spatial relation may be replaced with the relation of a quasi-co-location (QCL) or the like. QCL may be an indicator indicating statistical properties of the desired signal/channel.

For example, when the desired signal/channel and the reference RS are in a spatial relation, this may mean that it is assumable that the desired signal/channel and the reference RS are identical in at least one of Doppler shift, a Doppler spread, an average delay, a delay spread, and a spatial parameter (for example, a spatial domain transmission filter, a spatial domain reception filter (spatial domain receive filter), and so on) (the desired signal/channel and the reference signal are in a QCL relation in terms of at least one of these).

In NR, uplink signal transmission may be controlled based on presence/absence of beam correspondence (BC). BC may be, for example, the capability of a certain node (for example, a base station or UE) of determining a beam used to transmit signals (transmit beam or Tx beam), based on a beam used to receive signals (receive beam or Rx beam).

Note that BC may be referred to as transmit/receive beam correspondence (Tx/Rx beam correspondence), beam reciprocity, beam calibration, calibrated/non-calibrated, reciprocity calibrated/non-calibrated, the degree of correspondence, the degree of coincidence, and so on.

For example, in a case of absence of BC, the UE may transmit an uplink signal (for example, the PUSCH, PUCCH, SRS, or the like) by using a beam (spatial domain transmission filter) identical to a beam for an SRS (or SRS resource) indicated by the base station, based on measurement results for one or more SRS (or SRS resources).

On the other hand, in a case of presence of BC, the UE may transmit an uplink signal (for example, the PUSCH, PUCCH, SRS, or the like) by using a beam (spatial domain transmission filter) that is identical to or that corresponds to a beam used to receive a certain SSB or CSI-RS (or a CSI-RS resource) (spatial domain reception filter).

### (Spatial Relation of PUCCH)

Higher layer signaling (for example, Radio Resource Control (RRC) signaling) may be used to configure, for the UE, a parameter used for PUCCH transmission (PUCCH configuration information and PUCCH-Config). The PUCCH configuration information may be configured for each partial band (for example, an uplink bandwidth part (Bandwidth part (BWP)) in a carrier (also referred to as a cell, a component carrier, and so on).

The PUCCH configuration information may include a list of PUCCH resource set information (for example, PUCCH-ResourceSet) and a list of PUCCH spatial relation information (for example, PUCCH-SpatialRelationInfo).

The PUCCH resource set information may include a list (for example, resourceList) of PUCCH resource indices (IDs, for example, PUCCH-ResourceIds).

In a case where the UE has no dedicated PUCCH resource configuration information (for example, dedicated PUCCH resource configuration) provided by PUCCH resource set information in the PUCCH configuration information (before RRC setup), the UE may determine the PUCCH resource set, based on a parameter (for example, pucch-ResourceCommon) in system information (for example, System Information Block Type1 (SIB1) or Remaining minimum system information (RMSI)). The PUCCH resource set may include 16 PUCCH resources.

On the other hand, in a case where the UE has the dedicated PUCCH resource configuration information (UE-dedicated uplink control channel configuration or dedicated PUCCH resource configuration) (after RRC setup), the UE may determine the PUCCH resource set in accordance with the number of UCI information bits.

The UE may determine one PUCCH resource (index) in the above-described PUCCH resource set (for example, the determined PUCCH resource set specific to the cell or dedicated to the UE), based on at least one of the value of a certain field (for example, a PUCCH resource indicator field) in downlink control information (DCI) (for example, DCI format 1_0 or 1_1 used for scheduling of the PUSCH), the number of CCEs (N_{CCE}) in a control resource set (CORESET) for reception of a PDCCH carrying the DCI, and the index (n_{CCE}, ₀) of a leading (first) CCE for reception of the PDCCH.

The PUCCH spatial relation information (for example, an RRC information element "PUCCH-spatialRelationInfo") may indicate a plurality of candidate beams (spatial domain filters) for PUCCH transmission. The PUCCH spatial relation information may indicate spatial association between an RS (Reference Signal) and the PUCCH.

A list of PUCCH spatial relation information includes at least one entry (PUCCH spatial relation information or PUCCH spatial relation information IE (Information Element)). Each piece of PUCCH spatial relation information may include, for example, at least one of the index of the PUCCH spatial relation information (ID, for example, pucch-SpatialRelationInfoId), the index of a serving cell (ID, for example, servingCellId), the index of the RS, and information related to the RS having a spatial relation with the PUCCH.

For example, the information related to the RS may be an SSB index, a CSI-RS index (for example, an NZP (Non-Zero Power)-CSI-RS resource configuration ID), or an SRS resource ID and the ID of the BWP. The SSB index, the CSI-RS index, and the SRS resource ID may be associated with at least one of a beam, a resource, and a port selected by measurement of the corresponding RS.

A MAC (Medium Access Control) CE (Control Element) may indicate at least one of one or more pieces of PUCCH spatial relation information (for example, PUCCH-SpatialRelationInfo or a candidate beam) in the list of PUCCH spatial relation information.

The UE may receive a MAC CE that activates or deactivates the PUCCH spatial relation information (PUCCH spatial relation information activation/deactivation MAC CE or PUCCH spatial relation information indication MAC CE).

3 ms after transmission of acknowledgment (ACK) for a MAC CE activating certain PUCCH spatial relation information, the UE may activate PUCCH related information specified by the MAC CE.

The UE may control transmission of the PUCCH, based on the PUCCH spatial relation information activated by the MAC CE. Note that in a case where the list of PUCCH spatial relation information includes a single piece of PUCCH spatial relation information, the UE may control transmission of the PUCCH, based on the PUCCH spatial relation information.

### (Spatial Relation of PUSCH)

The UE may receive information (SRS configuration information, for example, a parameter in an RRC control element "SRS-Config") used to transmit the measurement reference signal (for example, the sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with a certain number of SRS resources (a certain number of SRS resources may be grouped). Each SRS resource may be identified by an SRS resource indicator (SRI) or an SRS resource ID.

The SRS resource set information may include an SRS resource set ID (Identifier) (SRS-ResourceSetId), a list of SRS resource IDs (SRS-ResourceIds) used in the resource set, an SRS resource type (for example, one of a periodic SRS, a semi-persistent SRS, and an aperiodic CSI (aperiodic SRS)), and information regarding the usage of the SRS (for example, beam management, codebook, non-codebook, antenna switching, or the like).

The SRS resource information may include an SRS resource ID (SRS-ResourceId), the number of SRS ports, an SRS port number, transmission Comb, SRS resource mapping (for example, a time and/or frequency resource position, resource offset, the period of resources, the number of repetitions, the number of SRS symbols, an SRS bandwidth, and so on), hopping related information, an SRS resource type, a sequence ID, SRS spatial relation information, and so on.

The SRS spatial relation information (for example, an RRC information element "spatialRelationInfo") may indicate spatial relation information regarding the spatial relation between a certain reference signal and the SRS. The certain reference signal may be at least one of a synchronization signal/broadcast channel (SS/PBCH: Synchronization Signal/Physical Broadcast Channel) block, a channel state information reference signal (CSI-RS), and the SRS (for example, another SRS). In this regard, the SS/PBCH block may be referred to as a synchronization signal block (SSB) .

The SRS spatial relation information may include, as the index of the certain reference signal, at least one of the SSB index, the CSI-RS resource ID, and the SRS resource ID.

Note that in the present disclosure, the SSB index, the SSB resource ID, and an SSBRI (SSB Resource Indicator) may be interchangeably interpreted. The CSI-RS index, the CSI-RS resource ID, and the CRI (CSI-RS Resource Indicator) may be interchangeably interpreted. The SRS index, the SRS resource ID, and the SRI may be interchangeably interpreted.

The SRS spatial relation information may include a serving cell index, a BWP index (BWP ID), and the like that correspond to the certain reference signal.

For a certain SRS resource, in a case where spatial relation information related to the SSB or CSI-RS and the SRS is configured for the UE (for example, in a case of presence of BC), the UE may transmit the SRS resource by using the same spatial domain filter as a spatial domain filter for reception of the SSB or the CSI-RS. In other words, in this case, the UE may assume that a UE receive beam for the SSB or the CSI-RS is the same as a UE transmit beam for the SRS.

For a certain SRS (target SRS) resource, in a case where spatial relation information related to another SRS (reference SRS) and the certain SRS (target SRS) is configured for the UE (for example, in a case of absence of BC), the UE may transmit the target SRS resource by using the same spatial domain filter as a spatial domain filter for transmission of the SRS. In other words, in this case, the UE may assume that a UE transmit beam for the reference SRS is the same as a UE transmit beam for the target SRS.

The UE may determine the spatial relation of the PUSCH scheduled by using the DCI, based on the value of a certain field (for example, the SRS resource indicator (SRI) field) in the DCI (for example, DCI format 0_1). Specifically, the UE may use, for PUSCH transmission, the spatial relation information regarding the SRS resource (for example, the RRC information element "spatialRelationInfo") determined based on the value of the certain field (for example, SRI).

In a case of configured grant type 1, the UE may determine the spatial relation of the PUSCH configured by using configured grant configuration information (for example, an RRC information element "ConfiguredGrantConfig"), based on the value of a certain parameter (for example, an RRC information element srs-ResourceIndicator) in configured uplink grant (for example, an RRC information element rrc-ConfiguredUplinkGrant) in the configured grant configuration information.

In a case of configured grant type 2, the UE may determine the spatial relation of the PUSCH configured by using configured grant configuration information (for example, the RRC information element "ConfiguredGrantConfig"), based on the value of a certain field (for example, an SRI field) in the DCI cyclic redundancy check (CRC) scrambled with a configured scheduling-radio network temporary identifier (CS-RNTI).

In this manner, the UE may transmit the PUSCH by using a spatial domain filter that is the same as or that corresponds to a spatial domain filter used to receive or transmit a reference RS (SSB, CSI-RS, or SRS) in a spatial relation with the SRS resource of the SRI determined based on the DCI or configured grant configuration information.

However, in a case where a certain condition is satisfied, the UE may fail to determine the spatial relation used to transmit the PUSCH, based on the certain field (for example, the SRI field) in the DCI or a certain parameter (for example, SRI) in the configured grant configuration information.

For example, the DCI (for example, DCI format 0_0 or 0_1 used for scheduling of the PUSCH) does not necessarily include the SRI field. The SRI field is not specified for DCI format 0_0 in specifications. The SRI field is specified for DCI format 0_1 in specifications. However, the SRI field is an optional item, and thus DCI format 0_1 used to schedule the PUSCH is assumed not to include the SRI field in some cases.

The configured grant configuration information does not necessarily include the SRI. The SRI (for example, the RRC information element "srs-ResourceIndicator") is specified in specifications for configured uplink grant in the configured grant configuration information. However, the SRI is an optional item, and thus the configured uplink grant is assumed not to include the SRI. In a configured grant type 2, the DCI CRC-scrambled with the CS-RNTI (DCI for activation of the configured grant configuration information) does not necessarily include the SRI field.

Thus, the inventors of the present invention studied about a method for appropriately determining at least one spatial relation of the PUSCH scheduled by using the DCI without the SRI field (for example, DCI format 0_0 or 0_1) and the PUSCH configured by using configured grant configuration information without the SRI, and came up with the present invention.

Embodiments according to the present disclosure will be described in detail with reference to the drawings as follows. The configurations illustrated in the embodiments may be employed independently or may be employed in combination.

In the description below, "SRS," "SRS resource," "SRS resource ID," "SRS resource identified by the SRS resource ID," "SRS transmitted by using the SRS resource identified by the SRS resource ID," and the like may be interchangeably interpreted. "SRI," "SRS resource identifier," "SRS resource ID," and the like may be interchangeably interpreted. The SRI field in the DCI is not limited to this name as long as the SRI field is a field for the SRI.

"PUCCH," "PUCCH resource," "PUCCH resource ID," "PUCCH resource identified by the PUCCH resource ID," "PUCCH transmitted by using the PUCCH resource identified by the PUCCH resource ID," "PUCCH format," and the like may be interchangeably interpreted.

"Spatial relation," "spatial domain filter," "beam," and "QCL relation" may be interchangeably interpreted. "Spatial relation used to transmit the signal/channel," "spatial domain transmission filter," and "transmit beam" may be interchangeably interpreted. "Spatial relation used to receive the signal/channel," "spatial domain reception filter," and "receive beam" may be interchangeably interpreted.

### (First Aspect)

In a case where the PUSCH is scheduled by using DCI format 0_0 for which the SRI field is not specified in specifications, the UE is assumed to transmit the PUSCH in accordance with the spatial relation corresponding to a PUCCH resource with the lowest ID in the PUCCH resources configured for an uplink BWP that is active within the cell in which the PUSCH is to be scheduled.

On the other hand, as described above, it is also assumed that DCI format 0_1 for which the SRI field is specified in specifications as an option includes no SRI field. Similarly, it is also assumed that the configured grant configuration information for which the SRI is specified in specifications as an option does not include the SRI.

Thus, in the first aspect, a case is extended in which the spatial relation of the PUCCH (spatial relation corresponding to a certain PUCCH resource) is used for the PUSCH.

Specifically, the UE may control, in accordance with the spatial relation of the PUCCH (spatial relation corresponding to a certain PUCCH resource), transmission of at least one of the PUSCH scheduled by using the DCI without the SRI field (particularly, DCI format 0_1) and the PUSCH configured by using the configured grant configuration information without the SRI.

Note that the DCI may be CRC-scrambled with, for example, C-RNTI, MCS-RNTI, CS-RNTI, or TC-RNTI.

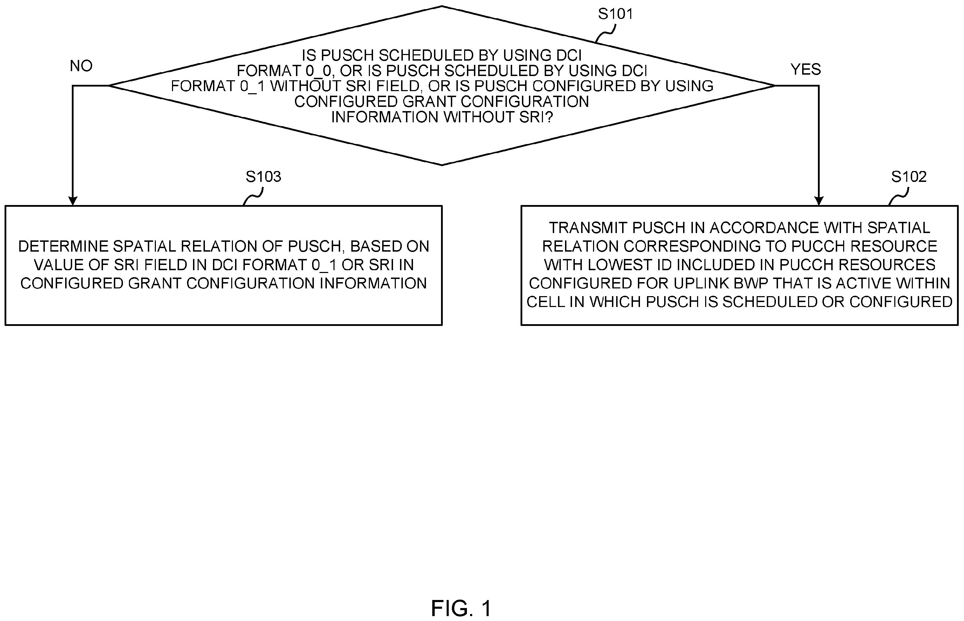

FIG. 1 is a flowchart to show an example of determination of the spatial relation of the PUSCH according to the first aspect. As shown in FIG. 1, in step S101, the UE may determine whether any of the following conditions is satisfied.
- the PUSCH is scheduled by using DCI format 0_0 or
- the PUSCH is scheduled by using DCI format 0_1 without the SRI field or
- the PUSCH is configured by using the configured grant configuration information without the SRI.

In a case where any of the above-described conditions is satisfied (step S101; YES), in step S102, the UE may transmit the PUSCH in accordance with the spatial relation corresponding to a PUCCH resource with a certain ID (for example, the lowest ID) in the PUCCH resources configured for an uplink BWP that is active within the cell in which the PUSCH is to be scheduled or configured.

On the other hand, in a case where none of the above-described conditions is satisfied (step S101; NO) (in other words, the PUSCH is scheduled by using DCI format 0_1 with the SRI field or the PUSCH is configured by using the configured grant configuration information with the SRI), in step S103, the UE may determine the spatial relation of the PUSCH, based on the value of the SRI field in DCI format 0_1 or the SRI in the configuration information grant configuration information.

According to the first aspect, the spatial relation of the PUSCH scheduled by using the DCI without the SRI field (particularly, DCI format 0_1) and the PUSCH configured by using the configured grant configuration information without the SRI can be appropriately determined in accordance with the spatial relation corresponding to a certain PUCCH resource.

### (Second Aspect)

To establish uplink synchronization and the like, the UE executes a random access procedure. For example, the random access procedure includes contention-based random access (also referred to as CBRA and so on) and non-contention-based random access (also referred to as Non-CBRA, contention-free random access (CFRA), and so on).

In the CBRA, the user terminal transmits a preamble randomly selected from a plurality of preambles (also referred to as random access preambles, random access channels (Physical Random Access Channels (PRACHs)), RACH preambles, and so on) defined for each cell. The contention-based random access is a user terminal initiated random access procedure and can be used, for example, at the time of initial access, at the start or restart of UL transmission, or the like.

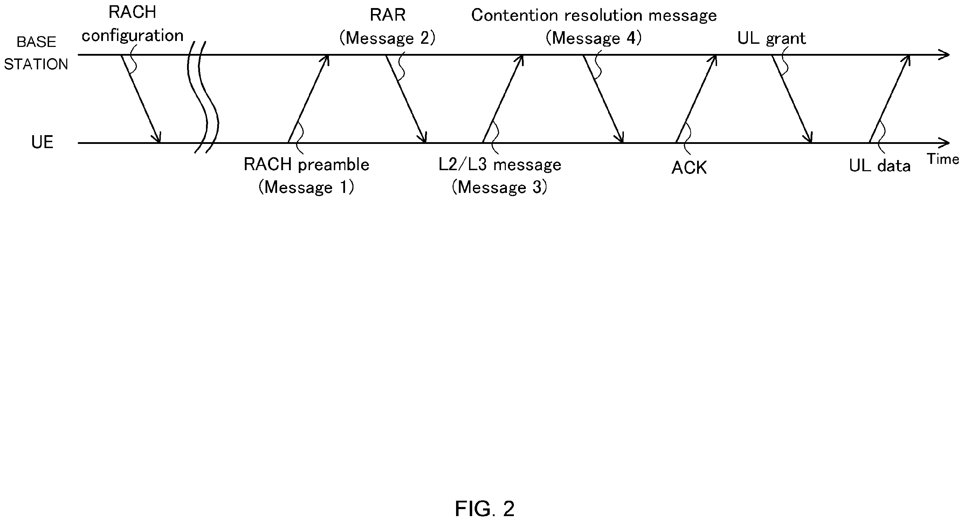

FIG. 2 is a diagram to show an example of the CBRA. In FIG. 2, the user terminal receives, in advance, information (PRACH configuration information) indicating a configuration (PRACH configuration or RACH configuration) of a random access channel (PRACH) through system information (for example, Mater Information Block (MIB) and/or System Information Block (SIB) or higher layer signaling (for example, RRC signaling).

The PRACH configuration information can indicate, for example, a plurality of preambles defined for each cell (for example, preamble formats), time domain resources and frequency domain resources that are used for PRACH transmission, and so on.

As shown in FIG. 2, the UE randomly selects one of a plurality of preambles indicated by the PRACH configuration information and transmits the selected preamble on the PRACH (message 1) in a case where the UE transitions from an idle (RRC_IDLE) state to an RRC connected (RRC_CONNECTED) state (for example, at the time of initial access), a case where the UE is in the RRC connected state but UL synchronization has not been established (for example, at the start or restart of UL transmission), or the like.

When the base station detects the preamble, in response, the base station transmits a random access response (RAR) (message 2). In a case of failing in reception of the RAR within a certain period (RAR window) after transmission of the preamble, the UE may transmit the preamble again (retransmission) with transmission power for the PRACH being increased.

In a case of receiving the RAR, the UE adjusts a UL transmission timing, based on timing advance (TA) included in the RAR, to establish the UL synchronization. The UE uses the PUSCH scheduled by UL grant in the RAR to transmit a higher layer (L2/L3: Layer 2/Layer 3) control message (message 3). The control message includes the identifier of the UE (UE-ID). The identifier of the user terminal may be, for example, a certain RNTI or a UE-ID in a higher layer.

The base station transmits a message for contention resolution in response to the higher layer control message (message 4). The message for contention resolution is transmitted based on a destination corresponding to the identifier of the user terminal included in the control message. The user terminal having succeeded in detecting the message for contention resolution transmits acknowledgment (ACK) for an HARQ (Hybrid Automatic Repeat reQuest) to the radio base station. Thus, the user terminal in the idle state transitions to the RRC connected state.

On the other hand, the user terminal having failed in detection of the message for contention resolution determines that contention has occurred, reselects a preamble, and repeats the random access procedure from message 1 to message 4. In a case of detecting, through the ACK from the user terminal, that the contention has been resolved, the radio base station transmits UL grant to the user terminal. The user terminal starts UL data by using a UL resource allocated by the UL grant.

In the CBRA as described above, in a case where the PUSCH is scheduled by using DCI format 0_0 CRC-scrambled with a temporary cell (TC-RNTI), the UE retransmits message 3 on the PUSCH. Until message 3 is received (until the contention is resolved), the base station is prevented from identifying the UE. This is because message 3 includes the identifier of the UE as described above.

Thus, in a case where the UE transmits the PUSCH scheduled by using DCI format 0_0 CRC-scrambled with the TC-RNTI, the base station may fail to recognize which spatial relation is used to transmit the PUSCH by the UE.

Thus, in the second aspect, the spatial relation for transmission of the PUSCH is determined based on at least one of whether the UE has dedicated PUSCH configuration information and the RNTI used for CRC scrambling of the DCI (for example, DCI format 0_0) used to schedule the PUSCH.

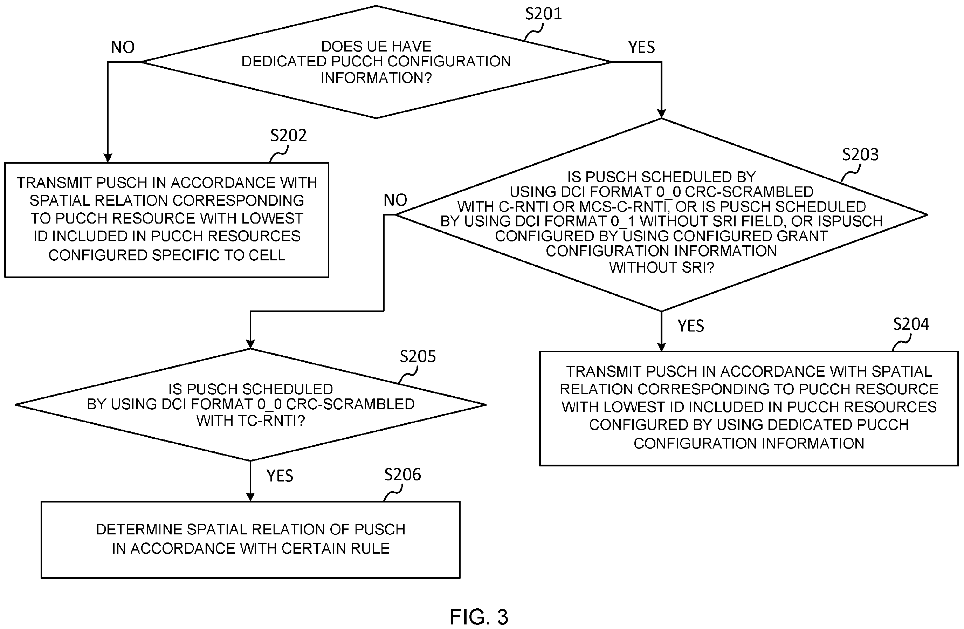

FIG. 3 is a flowchart to show an example of determination of the spatial relation of the PUSCH according to the second aspect. As shown in FIG. 3, in step S201, the UE determines whether the UE has dedicated PUCCH configuration information (dedicated PUCCH configuration information is configured for the UE).

In a case where the UE has no dedicated PUCCH configuration information (step S201; NO), in step S202, the UE may transmit the PUSCH in accordance with the spatial relation corresponding to a PUCCH resource with a certain ID (for example, the lowest ID) in the PUCCH resources configured specific to the cell.

For example, the dedicated PUCCH configuration information may be PUCCH resource configuration information associated with UE dedicated PUCCH resource set information (for example, PUCCH-ResourceSet). The PUCCH resource configured specific to the cell may be a PUCCH resource provided by an RRC control element "pucch-ResourceCommon." The RRC control element "pucch-ResourceCommon" may be included in the system information (for example, SIB1).

On the other hand, in a case where the UE has dedicated PUCCH configuration information (step S201; YES), in step S203, the UE may determine whether any of the following conditions is satisfied.
- the PUSCH is scheduled by using DCI format 0_0 with a certain RNTI (for example, C-RNTI, MCS-C-RNTI, or CS-RNTI),
- the PUSCH is scheduled by using DCI format 0_1 without the SRI field, or
- the PUSCH is configured by using the configured grant configuration information without the SRI.

In a case where any of the above-described conditions is satisfied (step S203; YES), in step S204, the UE may transmit the PUSCH in accordance with the spatial relation corresponding to a PUCCH resource with a certain ID (for example, the lowest ID) in the PUCCH resources configured by using the dedicated PUCCH configuration information.

For example, the dedicated PUCCH configuration information may be an RRC control element "PUCCH-Config." The UE may determine the spatial relation corresponding to a PUCCH resource with the lowest ID to be used for the PUSCH, the PUCCH resource being included in one or more PUCCH resources identified by the list of "PUCCH-ResourceId" in "PUCCH-ResourceSet" in the RRC control element "PUCCH-Config." The dedicated PUCCH configuration information may be the RRC control element "PUCCH-Config" configured for an uplink BWP being active within the cell in which the PUSCH is to be scheduled.

On the other hand, in a case where none of the above-described conditions are satisfied (step S203; NO), in step S205, the UE may determine whether the PUSCH is scheduled by using DCI format 0_0 CRC-scrambled with the TC-RNTI. Note that the order of steps S203 and S205 shown in FIG. 3 is only illustrative and that step S205 may be executed before step S203.

In a case where the PUSCH is scheduled by using DCI format 0_0 CRC-scrambled with the TC-RNTI (step S205; YES), the UE may determine, in step S206, the spatial relation of the PUSCH in accordance with a certain rule. For example, the certain rule may be one of (1) to (4) below.
(1) The UE may transmit the PUSCH by using the same spatial domain filter as that in the transmission of the nearest PRACH (RACH preamble or preamble) in the random access procedure (for example, FIG. 2) in which DCI format 0_0 CRC-scrambled with the TC-RNTI is transmitted.
   In other words, in step S206, even in a case where the PUSCH is scheduled by using DCI format 0_0, the UE may control transmission of the PUSCH, based on the spatial relation of the nearest PRACH rather than on the spatial relation of the PUCCH with the lowest ID (step S102 in FIG. 1).
(2) The UE may transmit the PUSCH scheduled with DCI format 0_0 described above, by using the same spatial domain filter as that in the transmission of the nearest PUSCH scheduled by uplink grant in the RAR in the random access procedure (for example, FIG. 2) in which DCI format 0_0 CRC-scrambled with the TC-RNTI is transmitted.
   In other words, in step S206, even in a case where the PUSCH is scheduled by using DCI format 0_0, the UE may control transmission of the PUSCH scheduled with DCI format 0_0 described above, based on the spatial relation of the nearest PUSCH scheduled by uplink grant in the RAR rather than on the spatial relation of the PUCCH with the lowest ID (step S102 in FIG. 1).
(3) The UE may transmit the PUSCH in accordance with the spatial relation corresponding to a PUCCH resource with a certain ID (for example, the lowest ID) in the PUCCH resources configured specific to the cell. For example, the PUCCH resource configured specific to the cell may be a PUCCH resource provided by the RRC control element "pucch-ResourceCommon." The RRC control element "pucch-ResourceCommon" may be included in the system information (for example, SIB1).
   In other words, in step S206, even in a case of having dedicated PUCCH configuration information, the UE may control transmission of the PUSCH scheduled by using DCI format 0_0 described above, in accordance with the spatial relation corresponding to the PUCCH resource configured specific to the cell rather than with the configured PUCCH resource dedicated to the UE.
(4) The UE may transmit the PUSCH in accordance with the spatial relation corresponding to a PUCCH resource with a certain ID (for example, the lowest ID) in the PUCCH resources configured with the dedicated PUCCH configuration information. In other words, in step S206, the UE may operate as in step S204.

According to the second aspect, the spatial relation of the PUSCH scheduled by using the DCI without the SRI field (particularly, DCI format 0_1) and the PUSCH configured by using the configured grant configuration information without the SRI can be appropriately determined. In particular, the spatial relation of the PUSCH scheduled by using the DCI CRC-scrambled with the TC-RNTI can be appropriately determined.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

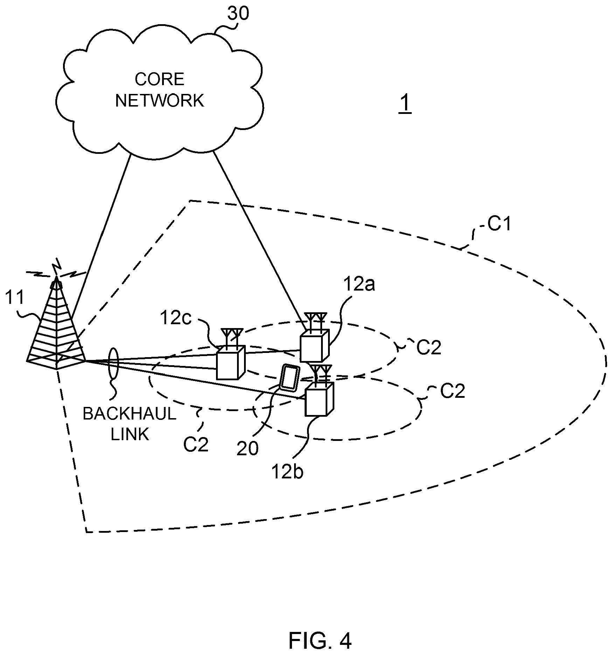

FIG. 4 is a diagram to show an example of a schematic structure of the radio communication system according to one embodiment. The radio communication system 1 may be a system implementing a communication using Long Term Evolution (LTE), LTE-Advanced (LTE-A), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

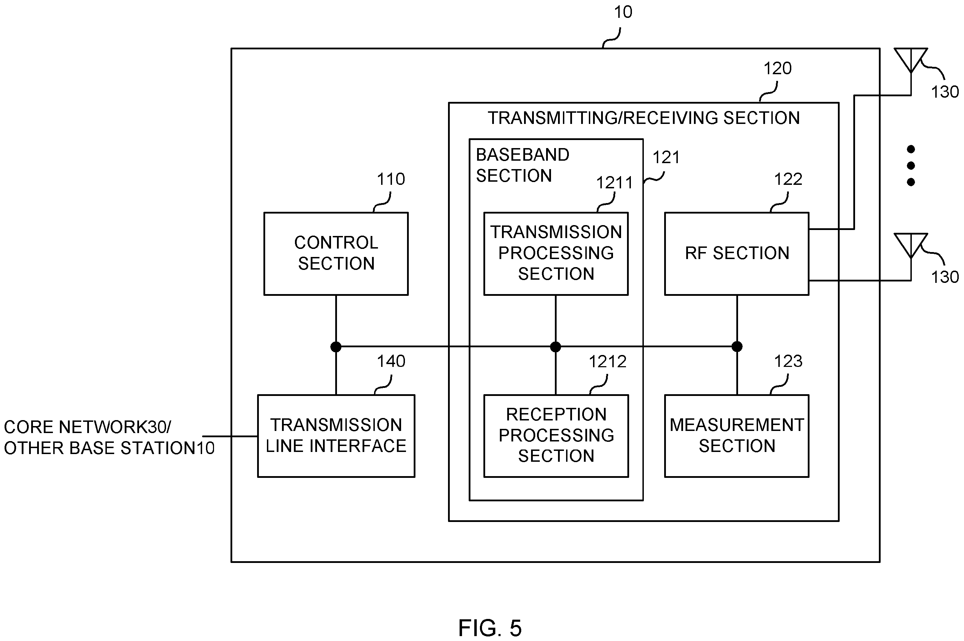

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information not including the field for the sounding reference signal (SRS) resource indicator or configuration information not including the SRS resource indicator. The transmitting/receiving section 220 may transmit at least one of the PUCCH configuration information and the SRS configuration information.

The transmitting/receiving section 120 may receive an uplink shared channel scheduled by using the downlink control information or configured by using the configuration information.

The control section 210 may determine the spatial relation of the uplink shared channel and control reception of the uplink shared channel.

### (User Terminal)

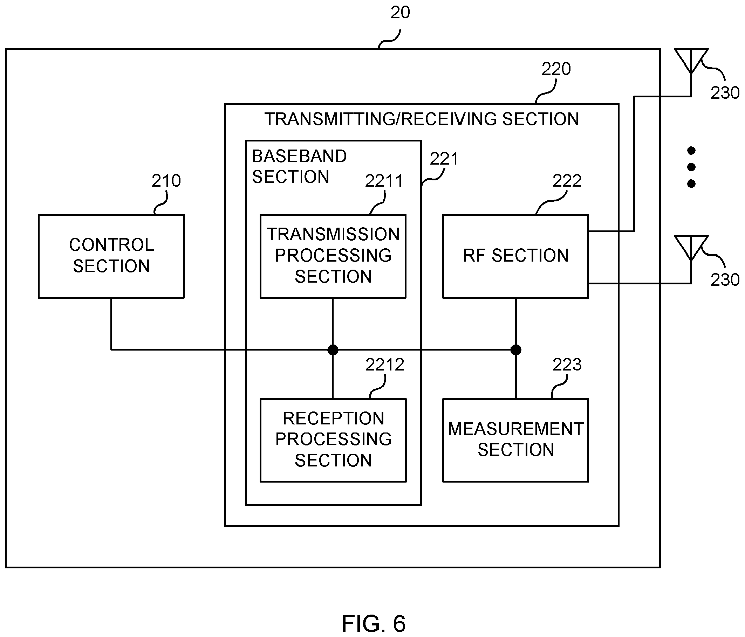

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may receive downlink control information not including the field for the sounding reference signal (SRS) resource indicator or configuration information not including the SRS resource indicator. The transmitting/receiving section 220 may receive at least one of the PUCCH configuration information and the SRS configuration information.

The transmitting/receiving section 220 may transmit an uplink shared channel scheduled by using the downlink control information or configured by using the configuration information.

The control section 210 may determine the spatial relation used to transmit the uplink shared channel.

Specifically, the control section 210 may use, for transmission of the uplink shared channel, a spatial relation corresponding to an uplink control channel resource with the lowest identifier in one or more uplink control channel resources configured for an uplink bandwidth part that is active within a cell for transmitting the uplink shared channel (first aspect).

In a case where no dedicated uplink control channel configuration is configured for the user terminal 20, the control section 210 may use, for transmission of the uplink shared channel, a spatial relation corresponding to an uplink control channel resource with the lowest identifier in one or more uplink control channel resources configured specific to a cell (second aspect).

In a case where a dedicated uplink control channel configuration is configured for the user terminal 20 and the downlink control information is CRC-scrambled with a specific RNTI (for example, C-RNTI, MCS-C-RNTI, or CS-RNTI), the control section 210 may use, for transmission of the uplink shared channel, the same spatial relation as that of the nearest random access channel (second aspect).

In a case where a dedicated uplink control channel configuration is configured for the user terminal 20 and the downlink control information is CRC-scrambled with a specific RNTI (for example, TC-RNTI), the control section 210 may use, for transmission of the uplink shared channel, a spatial relation identical to that of the nearest random access channel (second aspect).

In a case where a dedicated uplink control channel configuration is configured for the user terminal 20 and the downlink control information is CRC-scrambled with a specific RNTI (for example, TC-RNTI), the control section 210 may use, for transmission of the uplink shared channel, a spatial relation identical to that of the nearest uplink shared channel scheduled by random access response (second aspect).

In a case where a dedicated uplink control channel configuration is configured for the user terminal 20 and the downlink control information is CRC-scrambled with a specific RNTI (for example, TC-RNTI), the control section 210 may use, for transmission of the uplink shared channel, a spatial relation corresponding to an uplink control channel resource with the lowest identifier included in one or more uplink control channel resources configured specific to a cell (second aspect).

In a case where a dedicated uplink control channel configuration is configured for the user terminal 20 and the downlink control information is CRC-scrambled with a specific RNTI (for example, TC-RNTI), the control section 210 may use, for transmission of the uplink shared channel, a spatial relation corresponding to an uplink control channel resource with the lowest identifier included in one or more configured uplink control channel resources dedicated to the user terminal 20 (second aspect).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

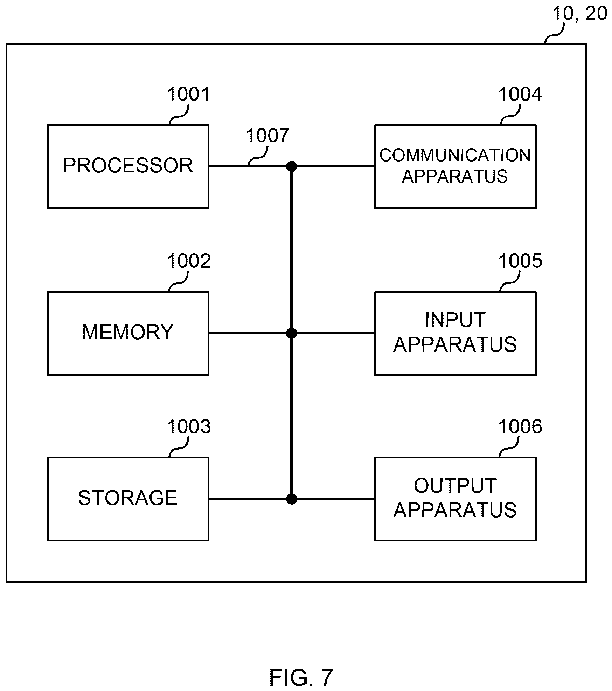

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink control information not including a field for a sounding reference signal (SRS) resource indicator or configuration information not including the SRS resource indicator;
a transmitting section that transmits an uplink shared channel scheduled by using the downlink control information or configured by using the configuration information; and
a control section that determines a spatial relation used to transmit the uplink shared channel.

2. The user terminal according to claim 1, wherein
the control section uses, for transmission of the uplink shared channel, a spatial relation corresponding to an uplink control channel resource with a lowest identifier in one or more uplink control channel resources configured for an uplink bandwidth part that is active within a cell for transmitting the uplink shared channel.

3. The user terminal according to claim 1, wherein
in a case where a dedicated uplink control channel configuration is configured for the user terminal and the downlink control information is cyclic redundancy check (CRC)-scrambled with a specific radio network temporary identifier (RNTI), the control section uses, for transmission of the uplink shared channel, a spatial relation identical to a spatial relation of a nearest random access channel.

4. The user terminal according to claim 1, wherein
in a case where a dedicated uplink control channel configuration is configured for the user terminal and the downlink control information is cyclic redundancy check (CRC)-scrambled with a specific radio network temporary identifier (RNTI), the control section uses, for transmission of the uplink shared channel, a spatial relation identical to a spatial relation of a nearest uplink shared channel scheduled by random access response.

5. The user terminal according to claim 1, wherein
in a case where a dedicated uplink control channel configuration is configured for the user terminal and the downlink control information is cyclic redundancy check (CRC)-scrambled with a specific radio network temporary identifier (RNTI), a spatial relation corresponding to an uplink control channel resource with a lowest identifier included in one or more uplink control channel resources configured specific to a cell is used for transmission of the uplink shared channel.

6. A radio communication method comprising:
receiving downlink control information not including a field for a sounding reference signal (SRS) resource indicator or configuration information not including the SRS resource indicator;
transmitting an uplink shared channel scheduled by using the downlink control information or configured by using the configuration information; and
determining a spatial relation used to transmit the uplink shared channel.
